# EUROPÄISCHE PATENTSCHRIFT

(11) **EP 3 250 442 B1**
(45) Veröffentlichungstag und Bekanntmachung des Hinweises auf die Patenterteilung: **24.07.2019**
(21) Anmeldenummer: 15760168.3
(22) Anmeldetag: 07.09.2015
(51) Int. Cl.: B60D 1/62, B60R 1/00, G06K 9/00, B62D 13/06, G06K 9/62, B60D 1/24, B60D 1/30, B60R 11/04

(54) **VERFAHREN UND VORRICHTUNG ZUR WIEDERERKENNUNG EINES ANHÄNGERS**
METHOD AND DEVICE FOR IDENTIFYING A TRAILER
PROCÉDÉ ET DISPOSITIF DE RECONNAISSANCE D'UNE REMORQUE

(30) Priorität: 29.01.2015 DE 102015201586
(43) Veröffentlichungstag der Anmeldung: 06.12.2017
(73) Patentinhaber: Volkswagen Aktiengesellschaft, 38440 Wolfsburg (DE)
(72) Erfinder: BULLMANN, Christoph, 12099 Berlin (DE); WEGE, Andreas, 10557 Berlin (DE)
(86) Internationale Anmeldenummer: PCT/EP2015/070350
(87) Internationale Veröffentlichungsnummer: WO 2016/119920

(56) Entgegenhaltungen:
- DE-A1-102008 045 436
- DE-A1-102011 104 256
- DE-A1-102011 120 814
- DE-A1-102014 211 692
- DE-B3-102011 101 990
- US-A1- 2009 271 078

## Beschreibung

Die vorliegende Erfindung betrifft ein Verfahren und eine Vorrichtung, um einen Anhänger, welcher an ein Fahrzeug angehängt ist, wiederzuerkennen.

Die DE 10 2008 013 457 A1 beschreibt ein Verfolgen eines an einem Anhänger befindlichen Merkmals über ein Sichtfeld einer Videokamera und ein Umwandeln einer in diesem Sichtfeld erfolgenden zeitlichen Verschiebung des Merkmals in eine Winkelverschiebung.

Die DE 10 2005 051 804 A1 offenbart eine Rangierhilfe für Fahrzeuggespanne. Das Dokument US 2009/271078 A1 ist als nächstliegender Stand der Technik nach dem Oberbegriff der Ansprüche 1 und 9 zu sehen.

Bei Verfahren, welche einen Knickwinkel automatisch anhand von Bildern eines Rückraums eines Zugfahrzeugs erfassen, treten nach dem Stand der Technik folgende Probleme auf:
- Zum Zeitpunkt des Motorstarts ist unbekannt, ob ein Anhänger am Zugfahrzeug angehängt ist.
- Falls ein Anhänger am Zugfahrzeug angehängt ist, sind zum Zeitpunkt des Motorstarts Informationen bezüglich des Anhängers (beispielsweise die Deichsellänge) unbekannt.
- Falls ein Anhänger am Zugfahrzeug angehängt ist, ist zum Zeitpunkt des Motorstarts der Knickwinkel nicht bekannt.

Der Knickwinkel ist dabei als ein Winkel zwischen der Längsachse des Zugfahrzeugs und der Längsachse des Anhängers definiert.

Die vorliegende Erfindung stellt sich die Aufgabe, die oben genannten Probleme nach dem Stand der Technik zumindest teilweise abzumildern.

Erfindungsgemäß wird diese Aufgabe durch ein Verfahren zur Wiedererkennung eines Anhängers nach Anspruch 1 und durch eine Vorrichtung zur Wiedererkennung eines Anhängers nach Anspruch 9 gelöst. Die abhängigen Ansprüche definieren bevorzugte und vorteilhafte Ausführungsformen der vorliegenden Erfindung.

Im Rahmen der vorliegenden Erfindung wird ein Verfahren zur Wiedererkennung eines Anhängers bereitgestellt, wobei der Anhänger an einem Zugfahrzeug bzw. Fahrzeug angehängt ist. Dabei umfasst das Verfahren folgende Schritte:
Erfassen eines Bildes, in welchem zumindest ein Teil des Anhängers enthalten ist. Das Bild kann beispielsweise mit einer Kamera erfasst werden, welche am Fahrzeug angebracht ist und den Raum direkt hinter dem Fahrzeug erfasst.

Extrahieren eines oder mehrerer Merkmale des Anhängers aus dem Bild. In diesem Schritt können ein oder mehrere beliebige Merkmale des Anhängers durch eine Analyse des Bildes extrahiert werden. Beispielsweise kann es sich bei einem solchen Merkmal um eine extra zum Zweck der Wiedererkennung an dem Anhänger angebrachte Markierung handeln.

Bestimmen des Anhängers als einen bekannten Anhänger, wenn das oder die Merkmale mit im Fahrzeug abgespeicherten Mustern dieses bekannten Anhängers übereinstimmen. In diesem Schritt werden insbesondere das oder die aus dem Bild erfassten Merkmale mit Mustern verglichen, welche jeweils einem oder mehreren Merkmalen von Anhängern entsprechen, die vorher am Fahrzeug angehängt waren. Wird bei diesem Vergleich ein Muster erkannt, welches mit dem oder den aus dem Bild erfassten Merkmalen übereinstimmt, handelt es sich bei dem aktuell am Fahrzeug angebrachten Anhänger um einen dem Fahrzeug bereits bekannten Anhänger.

Falls mit dem erfindungsgemäßen Verfahren der aktuell an dem Fahrzeug angehängte Anhänger als bekannter Anhänger wiedererkannt wird, ist vorteilhafterweise die Frage, ob ein Anhänger an dem Fahrzeug angehängt ist, positiv beantwortet. Dabei kann vorteilhafterweise auch zwischen einem Anhänger und einem anderen an der Anhängerkupplung des Fahrzeugs angebrachten Aufbau (z. B. einem Fahrradträger) unterschieden werden.

Der Schritt des Extrahierens des oder der Merkmale des Anhängers kann dabei mit merkmalsbasierten Algorithmen Merkmale auf dem Anhänger in dem erfassten Bild erfassen. Dabei können die markantesten und stabilsten Merkmale als diejenigen Merkmale bestimmt werden, unter welchen der entsprechende Anhänger wiederzuerkennen ist. Zusätzlich können die relativen dreidimensionalen Positionen der bestimmten Merkmale ermittelt werden, so dass die Merkmale des jeweiligen Anhängers auch durch ihre relative Lage zueinander definiert sind. Bei dem Vergleich der aktuellen Merkmale des aktuell angehängten Anhängers mit den im Fahrzeug abgespeicherten Mustern bzw. Merkmalen kann die relative Lage der Merkmale zueinander eingesetzt werden, um Selbstverdeckungen bei dem Vergleich zu berücksichtigen. Dabei wird unter einer Selbstverdeckung auch verstanden, dass ein Merkmal ein anderes Merkmal überdeckt.

Für den Fall, dass der aktuell angehängte Anhänger als ein bereits bekannter Anhänger bestimmt wird, kann eine diesem Anhänger zugeordnete Information, welche vorher für diesen Anhänger in dem Fahrzeug abgespeichert worden ist, ausgelesen und zum Führen des Fahrzeugs mit dem angehängten Anhänger eingesetzt werden.

Dadurch können vorteilhafterweise bestimmte Informationen über den Anhänger sofort nach dem Motorstart des Fahrzeugs eingesetzt werden und müssen nicht nochmals erlernt oder vom Fahrer eingegeben werden.

Gemäß einer bevorzugten erfindungsgemäßen Ausführungsform werden mehrere Bilder erfasst, welche jeweils zumindest einen Teil des Anhängers aufweisen. Dabei werden aus jedem dieser erfassten Bilder ein oder mehrere Merkmale des Anhängers extrahiert. Das oder die Merkmale werden als ein Muster für den Anhänger abgespeichert, wenn sich die jeweils aus den einzelnen Bildern extrahierten Merkmale nur gering unterscheiden, so dass mit einiger Sicherheit feststeht, dass ein oder mehrere Merkmale des Anhängers in den Bildern erfasst wurden. Zusammen mit dem einen oder den mehreren Merkmalen wird dabei eine dem Anhänger zugeordnete Information über den Anhänger abgespeichert.

Die vorab beschriebene Ausführungsform kann beispielsweise bei der Deinitialisierung der Bildverarbeitungskomponente bzw. Kamera für die Anhängererkennung (d.h. in der Regel nach dem Ausschalten des Motors) durchgeführt werden und sorgt dafür, dass charakteristische Merkmale des Anhängers, an welchen der Anhänger später sicher wiedererkannt werden kann, abgespeichert werden.

Bei einer bevorzugten Variante wird das charakteristische Muster des Anhängers (d.h. das oder die in den Bildern des Anhängers extrahierten Merkmale) nur abgespeichert, wenn ein bisher noch unbekannter Anhänger erkannt wurde oder wenn ein bereits bekannter Anhänger aus einem noch unbekannten Blickwinkel erfasst wurde. Beim Abspeichern des charakteristischen Musters kann eine Datenkomprimierung eingesetzt werden.

Die dem Anhänger zugeordnete Information kann eine oder mehrere der folgenden Informationen umfassen:
- Die Deichsellänge.
- Die Deichselmitte relativ zu dem oder den für den Anhänger abgespeicherten Merkmal. Dabei wird unter der Deichselmitte das Zentrum der Stelle verstanden, an welcher die Deichsel mit dem Anhänger verbunden ist.

- Die Anhängerlänge oder Gesamt-Anhängerlänge. Dabei wird unter der Anhängerlänge insbesondere die Länge von Beginn der Deichsel bis zum Ende bzw. der Rückseite des Anhängers verstanden. Bei Kenntnis der Fahrzeugabmessungen lässt sich mit der Anhängerlänge somit die Länge des Gespanns bestimmen. Darüber hinaus kann mit der Anhängerlänge die Lage des Endes des Anhängers ausgehend vom Fahrzeug bestimmt werden.
- Der Radabstand des Anhängers.
- Die Höhe des Anhängers oder des Anhängeraufbaus.

Erfindungsgemäß umfasst jedes abgespeicherte Muster und damit jedes in dem Bild erfasste Merkmal des Anhängers ein Verlaufs-Merkmal, welches einem Intensitätsverlauf entlang einer Trajektorie in dem Bild entspricht. Die Trajektorie entspricht dabei einem Kreisbogen in der Fahrebene des Fahrzeugs und Anhängers um einen Drehpunkt an dem Fahrzeug, um welchen die Deichsel des Anhängers herumschwenkt, wenn der Anhänger mit der Deichsel an dem Fahrzeug angehängt ist.

Der Intensitätsverlauf kann beispielsweise ein Grauwertverlauf oder ein Farbwertverlauf sein. Das Verlaufs-Merkmal kann auch mehreren Intensitätsverläufen von Trajektorien in dem Bild entsprechen. In diesem Fall weisen die verschiedenen Kreisbögen der jeweiligen Trajektorien unterschiedliche Radien zu dem Drehpunkt auf.

Anhand einer Korrelationsberechnung kann beispielsweise die Korrelation zwischen dem aktuellen Verlaufs-Merkmal (d.h. dem oder den Intensitätsverläufen) und den im Fahrzeug abgespeicherten Mustern bestimmt werden. Wenn die berechnete Korrelation über einem bestimmten Korrelations-Schwellenwert liegt, gilt der aktuelle Anhänger als wiedererkannt. Jedes Verlaufs-Merkmal umfasst vorteilhafterweise mehrere markante Punkte des Intensitätsverlaufs. Dabei gilt ein Punkt des Intensitätsverlaufs als ein markanter Punkt, wenn für den jeweiligen Punkt ein Betrag der Steigung (Ableitung) des Intensitätsverlaufs größer als ein vorgegebener Steigungsschwellenwert ist.

Diese markanten Punkte entsprechen jeweils einer Kante im erfassten Bild. Die Lage dieser Kanten ist vorteilhafterweise jeweils ein charakteristisches Muster für den jeweiligen Anhänger.

Anders ausgedrückt sind die relativen Positionen der verwendeten Kanten auf den Ellipsen individuell für den jeweiligen Anhänger.

Gemäß einer bevorzugten erfindungsgemäßen Ausführungsform wird in dem erfassten Bild ein Ausschnitt bestimmt, in welchem die Deichsel des Anhängers angeordnet ist. Als Intensitätsverlauf des jeweiligen Verlaufs-Merkmals gilt bei dieser Ausführungsform nur derjenige Abschnitt einer Trajektorie, welcher in dem bestimmten Ausschnitt liegt.

Bei dieser erfindungsgemäßen Ausführungsform wird der jeweilige Anhänger anhand seiner Deichsel oder genauer anhand der Lage von Kanten, welche als Abbild der Deichsel im erfassten Bild vorhanden sind, charakterisiert.

Wenn der aktuell am Fahrzeug angehängte Anhänger als ein bereits bekannter Anhänger bestimmt wurde, kann abhängig von einer Verschiebung des oder der Merkmale, welche in dem erfassten Bild extrahiert wurden, gegenüber dem Muster, anhand welchem der Anhänger erkannt wurde, der Knickwinkel bestimmt werden.

Wenn für den aktuellen Anhänger die relative Lage der Deichselmitte bezüglich des oder der für den Anhänger abgespeicherten Merkmale bekannt ist, kann anhand der Lage der aktuellen Merkmale des aktuell an dem Fahrzeug angehängten Anhängers der aktuelle Knickwinkel bestimmt werden. Wenn die Merkmale des Anhängers den vorab beschriebenen Verlaufs-Merkmalen entsprechen, kann anhand der Verschiebung des aktuellen Intensitätsverlaufs zu dem abgespeicherten Intensitätsverlauf auf der jeweiligen Trajektorie der Knickwinkel bestimmt werden.

Vorteilhafterweise kann das oder können die für den jeweiligen Anhänger charakteristischen Merkmale für verschiedene Knickwinkel (d.h. aus verschiedenen Blickwinkeln der Kamera) abgespeichert werden, so dass für den jeweiligen Anhänger verschiedene Mustersätze (für die verschiedenen Knickwinkel) existieren.

Indem für denselben Anhänger verschiedene Mustersätze für verschiedene Knickwinkel abgespeichert sind, kann der Fall, dass bestimmte Merkmale des Anhängers für einen bestimmten Knickwinkel beispielsweise durch Überbauten verdeckt sind, ebenfalls erfindungsgemäß behandelt werden.

Im Rahmen der vorliegenden Erfindung wird auch eine Vorrichtung zur Wiedererkennung eines Anhängers bereitgestellt, welcher an einem Fahrzeug angehängt ist. Dabei umfasst die Vorrichtung eine Kamera, einen Speicher und Steuermittel. Die Kamera ist ausgestaltet, um ein Bild zu erfassen, in welchem zumindest ein Teil des Anhängers abgebildet ist. Die Vorrichtung ist ausgestaltet, um mit Hilfe der Steuermittel ein oder mehrere Merkmale aus dem erfassten Bild zu extrahieren und um den Anhänger dann als einen der Vorrichtung bereits bekannten Anhänger zu bestimmen, wenn das oder die Merkmale mit einem in dem Speicher abgespeicherten Muster des bekannten Anhängers übereinstimmen.

Die Vorteile der erfindungsgemäßen Vorrichtung entsprechen im Wesentlichen den Vorteilen des erfindungsgemäßen Verfahrens, welche vorab im Detail ausgeführt sind, so dass hier auf eine Wiederholung verzichtet wird.

Im Rahmen der vorliegenden Erfindung wird auch ein Fahrzeug bereitgestellt, welches eine erfindungsgemäße Vorrichtung umfasst.

Die vorliegende Erfindung ist insbesondere für Kraftfahrzeuge geeignet. Selbstverständlich ist die vorliegende Erfindung nicht auf diesen bevorzugten Anwendungsbereich eingeschränkt, da die vorliegende Erfindung zumindest prinzipiell auch bei Schiffen oder Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen mit Bezug zu den Figuren im Detail beschrieben.

Fig. 1 zeigt ein erfindungsgemäßes Fahrzeug mit einem angehängten Anhänger.

In Fig. 2 ist ein erfindungsgemäßes Bild einer Kamera in Blickrichtung eines angehängten Anhängers dargestellt.

Fig. 3 stellt den Intensitätsverlauf und die Ableitung des Intensitätsverlaufs im Bild der Fig. 2 entlang von mehreren Trajektorien dar.

In Fig. 4 ist ähnlich wie in Fig. 2 ein erfindungsgemäßes Bild dargestellt, wobei zusätzlich ein Ausschnitt im Bereich der Deichsel angegeben ist.

In Fig. 5 ist die Ableitung des Intensitätsverlaufs entlang von mehreren Trajektorien dargestellt, wobei der in Fig. 4 hervorgehobene Ausschnitt markiert ist.

Fig. 6 zeigt ein erfindungsgemäßes Fahrzeug mit einer erfindungsgemäßen Vorrichtung.

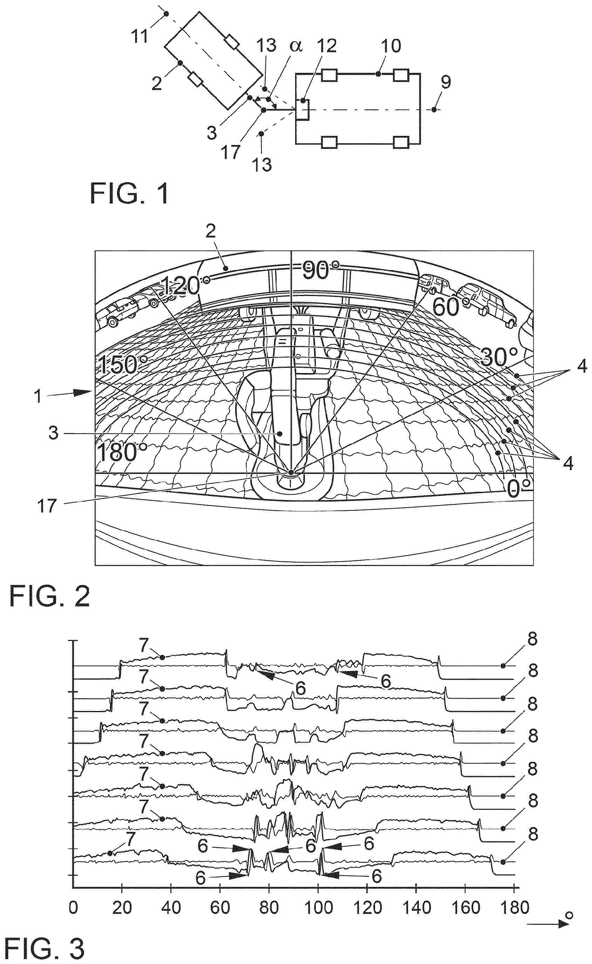

In Fig. 1 ist ein erfindungsgemäßes Fahrzeug 10 mit einer nach hinten gerichteten Kamera 12 dargestellt. An dem Fahrzeug 10 ist ein Anhänger 2 angehängt. Die Kamera 12 erfasst ein Bild des Anhängers 2 in einem Erfassungsbereich 13. Der Anhänger 2 ist über eine Deichsel 3 mit dem Fahrzeug 10 verbunden, wobei die Deichsel 3 an einem Kupplungspunkt 17 schwenkbar mit dem Fahrzeug 10 gekoppelt ist. Somit existiert ein Knickwinkel a, welcher den Winkel zwischen der Längsmittelachse 9 des Fahrzeugs 10 und der Längsmittelachse 11 des Anhängers 2 beschreibt.

In Fig. 2 ist ein Bild 1 der Kamera 12 dargestellt. Man erkennt in diesem Bild 1 den Anhänger 2 und die Deichsel 3, mit welcher der Anhänger 2 mit dem Fahrzeug 10 verbunden ist. Darüber hinaus sind in dem Bild mehrere Trajektorien 4 dargestellt, welche jeweils einem Kreisbogen um den Kupplungspunkt 17 in der Ebene der Fahrbahn, auf welchem das Fahrzeug 10 und der Anhänger 2 stehen bzw. fahren, entsprechen.

In Fig. 3 ist für jede dieser Trajektorien 4 der Intensitätsverlauf 7 über dem entsprechenden Winkel zu einer Senkrechten zur Längsmittelachse 9 des Fahrzeugs 10 in der Fahrebene dargestellt. Mit anderen Worten entspricht jeder Intensitätsverlaufs 7 (d.h. Grauwertverlauf oder Farbverlauf) dem Verlauf der Pixelwerte der auf der jeweiligen Trajektorie 4 vorhandenen Pixel. Darüber hinaus ist in Fig. 3 der Verlauf 8 der Ableitung des jeweiligen Intensitätsverlaufs 7 dargestellt. Dieser Ableitungsverlauf 8 wird mittels eines Tiefpass- und Gradientenfilters berechnet, mit welchem der jeweilige Intensitätsverlaufs 7 gefiltert wird. Lokale Extremwerte 6 dieses Ableitungsverlaufs 8 entsprechen Kanten im Bild 1.

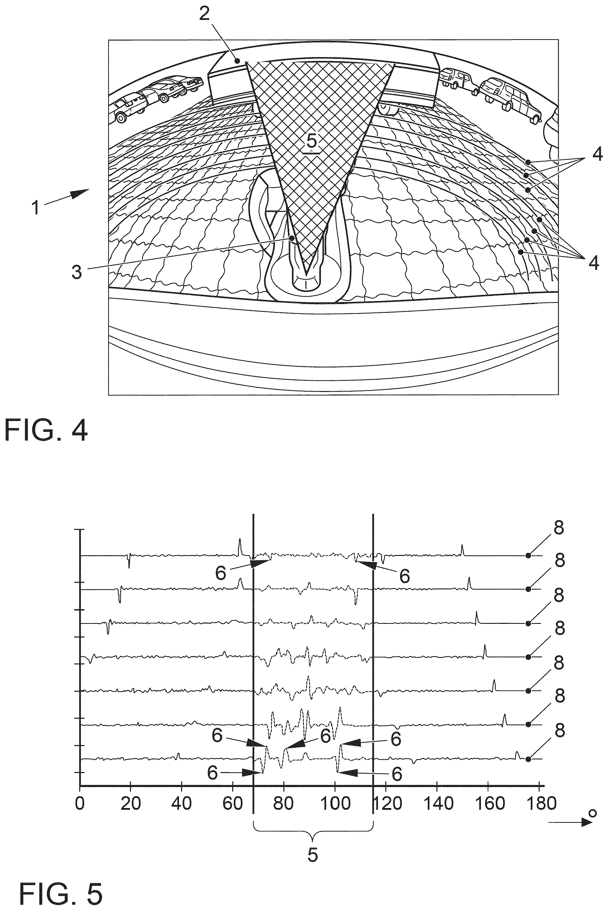

In Fig. 4 ist ein dem Bild der Fig. 2 ähnliches Bild 1 dargestellt. Der in Fig. 4 dargestellte Ausschnitt 5 definiert einen Bereich im Bild 1, in welchem die Deichsel 3 vorhanden ist.

Dieser Ausschnitt 5 ist in Fig. 5 ebenfalls gesondert markiert. Daher befinden sich die mit dem Bezugszeichen 6 markierten Extremwerte der Ableitungsverläufe 8 innerhalb dieses Ausschnitts 5. Mit anderen Worten sind mit dem Bezugszeichen 6 in Fig. 5 nur diejenigen Kanten markiert worden, welche im Bild 1 zur Deichsel 3 gehören können.

Die Lage dieser Kanten der Deichsel 3 auf den Trajektorien 4 zueinander definiert sehr gut den entsprechenden Anhänger 2. Mit anderen Worten weist jeder individuelle Anhänger 2 eine bestimmte Lage dieser Kanten auf, so dass jeder Anhänger über die Lage der Kanten zueinander wiedererkannt werden kann.

Darüber hinaus lässt sich aus der aktuellen Winkelposition der Lage der Kanten des jeweiligen Anhängers 2 sehr gut der aktuelle Knickwinkel α bestimmen. Wenn beispielsweise für eine bestimmte Lage der Kanten eines bestimmten Anhängers 2 der Knickwinkel a bekannt ist, kann über eine Winkelverschiebung der aktuellen Lage der Kanten zu der bestimmten Lage der Kanten der aktuelle Knickwinkel bestimmt werden, indem der bekannte Knickwinkel um die Winkelverschiebung verschoben wird.

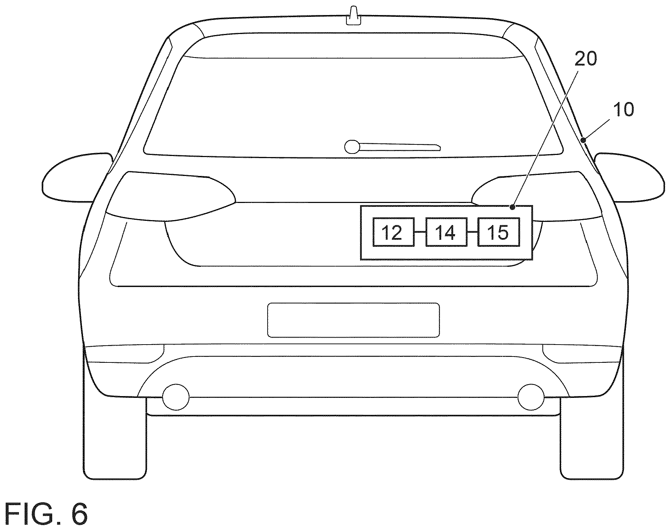

Schließlich ist in Fig. 6 ein erfindungsgemäßes Fahrzeug 10 dargestellt, welches eine erfindungsgemäße Vorrichtung 20 umfasst. Diese erfindungsgemäße Vorrichtung 20 umfasst ihrerseits eine Steuerung 14, eine Kamera 12 und einen Speicher 15, wobei die Kamera 12 und der Speicher 15 jeweils mit der Steuerung 14 verbunden sind. In dem Speicher 15 können für einmal mit der Kamera 12 erfasste Anhänger 2 weitere Informationen, wie beispielsweise die Deichsellänge oder die relative Lage der Deichselmitte zur Lage der Kanten, über welche der entsprechende Anhänger 2 charakterisiert ist, abgespeichert werden.

### Bezugszeichenliste

- 1: Bild
- 2: Anhänger
- 3: Deichsel
- 4: Trajektorie
- 5: Ausschnitt
- 6: Kanten
- 7: Intensitätsverlauf
- 8: 1. Ableitung des Intensitätsverlaufs
- 9: Längsmittelachse des Fahrzeugs
- 10: Fahrzeug
- 11: Längsmittelachse des Anhängers
- 12: Kamera
- 13: Erfassungsbereich
- 14: Steuerung
- 15: Speicher
- 17: Kupplungspunkt
- 20: Vorrichtung
- a: Knickwinkel

## Patentansprüche

1. Verfahren zur Wiedererkennung eines Anhängers (2), welcher an einem Fahrzeug (10) angehängt ist,
wobei das Verfahren folgende Schritte umfasst:
Erfassen eines Bildes (1), welches zumindest einen Teil des Anhängers (2) beinhaltet, Extrahieren mindestens eines Merkmals (6) des Anhängers (2) aus dem Bild (1), und Bestimmen des Anhängers (2) als einen bekannten Anhänger, wenn das mindestens eine Merkmal (6) mit einem abgespeicherten Muster des bekannten Anhängers übereinstimmt, **dadurch gekennzeichnet, dass** das mindestens eine Merkmal und jedes Muster mindestens ein Verlaufs-Merkmal (6) umfassen, welches einen Intensitätsverlauf (7) entlang einer Trajektorie (4) in dem Bild (1) aufweist, und
dass die Trajektorie (4) einem Kreisbogen um einen Drehpunkt (17) an dem Fahrzeug (10) entspricht, um welchen eine Deichsel (3) des Anhängers (2) herumschwenkt, wenn der Anhänger (2) mittels der Deichsel (3) an dem Fahrzeug (10) angehängt ist.

2. Verfahren nach Anspruch 1,
**dadurch gekennzeichnet,**
**dass**, wenn der Anhänger (2) als ein bereits bekannter Anhänger bestimmt wird, mindestens eine dem Anhänger (2) zugeordnete vorher in dem Fahrzeug (10) abgespeicherte Information zum Führen des Fahrzeugs (10) mit dem angehängten Anhänger (2) eingesetzt wird.

3. Verfahren nach Anspruch 1 oder 2,
**dadurch gekennzeichnet,**
**dass** mehrere Bilder (1), welche zumindest einen Teil des Anhängers (2) beinhalten, erfasst werden,
**dass** mindestens ein Merkmal (6) des Anhängers (2) aus jedem erfassten Bild (1) extrahiert wird,
**dass** das mindestens eine Merkmal (6) als ein Muster für den Anhänger (2) abgespeichert wird, wenn eine Variation des jeweiligen extrahierten mindestens einen Merkmals (6) unterhalb eines vorgegebenen Variationsschwellenwerts liegt, und
**dass** zusammen mit dem mindestens einen Merkmal (6) mindestens eine dem Anhänger (2) zugeordnete Information für den Anhänger (2) abgespeichert wird.

4. Verfahren nach Anspruch 2 oder 3,
**dadurch gekennzeichnet,**
**dass** die Information eine Deichsellänge und/oder eine Lage einer Deichselmittel relativ zu dem mindestens einen Merkmal (6) und/oder eine Länge des Anhängers (2) und/oder einen Radabstand des Anhängers (2) und/oder eine Höhe des Anhängers (2) umfasst.

5. Verfahren nach einem der vorhergehenden Ansprüche,
**dadurch gekennzeichnet,**
**dass** das mindestens eine Verlaufs-Merkmal mehrere Punkte (6) des Intensitätsverlaufs (7) umfasst, und
**dass** jeder dieser Punkte (6) einem Punkt des Intensitätsverlaufs (7) entspricht, für den der Betrag einer Steigung (8) des Intensitätsverlaufs (7) größer als ein vorgegebener Steigungsschwellenwert ist.

6. Verfahren nach einem der vorhergehenden Ansprüche,
**dadurch gekennzeichnet,**
**dass** in dem erfassten Bild (1) ein Ausschnitt (5) bestimmt wird, in welchem eine Deichsel (3) des Anhängers (2) liegt, und
**dass** jedes Verlaufs-Merkmal (6) nur zu einem Abschnitt der Trajektorie (4) gehört, welcher in dem bestimmten Ausschnitt (5) liegt.

7. Verfahren nach einem der vorhergehenden Ansprüche,
**dadurch gekennzeichnet,**
**dass**, wenn der Anhänger (2) als ein bereits bekannter Anhänger bestimmt wird, abhängig von einer Verschiebung des mindestens einen Merkmals (6), welches aus dem erfassten Bild (1) extrahiert wird, gegenüber dem Muster, mit welchem dieses mindestens eine Merkmal (6) übereinstimmt, ein Knickwinkel (α) bestimmt wird, welchen das Fahrzeug (10) und der angehängte Anhänger (2) ausbilden.

8. Verfahren nach einem der vorhergehenden Ansprüche,
**dadurch gekennzeichnet,**
**dass** für denselben Anhänger (2) das mindestens eine Merkmal mehrfach für verschiedene Knickwinkel (α) abgespeichert wird.

9. Vorrichtung zur Wiedererkennung eines Anhängers (2), welcher an einem Fahrzeug (10) angehängt ist,
wobei die Vorrichtung (20) eine Kamera (12), einen Speicher (15) und Steuermittel (14) umfasst,
wobei die Kamera (12) ausgestaltet ist, um ein Bild (1) zu erfassen, welches zumindest einen Teil des Anhängers (2) beinhaltet,
wobei die Vorrichtung (20) ausgestaltet ist, um mittels der Steuermittel (14) mindestens ein Merkmal (6) aus dem Bild (1) zu extrahieren und um den Anhänger (2) als einen der Vorrichtung (20) bekannten Anhänger zu bestimmen, wenn das mindestens eine Merkmal (6) mit einem in dem Speicher (15) abgespeicherten Muster des bekannten Anhängers übereinstimmt,
**dadurch gekennzeichnet, dass** das mindestens eine Merkmal und jedes Muster mindestens ein Verlaufs-Merkmal (6) umfassen, welches einen Intensitätsverlauf (7) entlang einer Trajektorie (4) in dem Bild (1) aufweist, und
dass die Trajektorie (4) einem Kreisbogen um einen Drehpunkt (17) an dem Fahrzeug (10) entspricht, um welchen eine Deichsel (3) des Anhängers (2) herumschwenkt, wenn der Anhänger (2) mittels der Deichsel (3) an dem Fahrzeug (10) angehängt ist.

10. Vorrichtung nach Anspruch 9, **dadurch gekennzeichnet, dass** die Vorrichtung (20) zur Durchführung des Verfahrens nach einem der Ansprüche 1-8 ausgestaltet ist.

## Claims

1. Method for recognizing a trailer (2) attached to a vehicle (10), the method comprising the steps of:
- acquiring an image (1) comprising at least a part of the trailer (2),
- extracting at least one feature (6) of the trailer (2) from the image (1), and
- determining whether the trailer (2) is a known trailer when the at least one feature (6) matches a stored pattern of the known trailer,
**characterized in that**
- the at least one feature and each pattern comprises at least one history feature (6), which has an intensity profile (7) along a trajectory (4) in the image (1), and
- the trajectory (4) corresponds to a circular arc about a pivot point (17) on the vehicle (10) about which a drawbar (3) of the trailer (2) pivots when the trailer (2) is attached to the vehicle (10) by means of the drawbar (3).

2. Method according to claim 1, **characterized in that** when the trailer (2) is designated as an already known trailer, at least one item of information associated with the trailer (2) and previously stored in the vehicle (10) is used to guide the vehicle (10) with the attached trailer (2).

3. Method according to claim 1 or 2,
**characterized in that**
- a plurality of images (1), which contain at least a part of the trailer (2), are detected,
- at least one feature (6) of the trailer (2) is extracted from each captured image (1),
- the at least one feature (6) is stored as a pattern for the trailer (2) when a variation of the at least one respective extracted feature (6) lies below a predetermined variation threshold, and
- at least one item of information associated with the trailer (2) is stored together with the at least one feature (6) for the trailer (2).

4. Method according to claim 2 or 3,
**characterized in that**
the information refers to a drawbar length and/or a position of a drawbar relative to the at least one feature (6) and/or a length of the trailer (2) and/or a wheelbase of the trailer (2) and/or a height of the trailer (2).

5. Method according to any one of the preceding claims,
**characterized in that**
- the at least one profile feature comprises a plurality of points (6) of the intensity profile (7), and
- each of these points (6) corresponds to a point of the intensity profile (7) for which the magnitude of a gradient (8) of the intensity profile (7) is greater than a predetermined gradient threshold value.

6. Method according to any one of the preceding claims,
**characterized in that**
- a section (5) is determined in the acquired image (1), in which a drawbar (3) of the trailer (2) is located, and
- each profile feature (6) belongs to only a part of the trajectory (4) lying in the particular section (5).

7. Method according to any one of the preceding claims,
**characterized in that**
if the trailer (2) is determined to be an already known trailer, an articulation angle (α) is determined which qualifies the vehicle (10) and the attached trailer (2) as a function of a displacement of the at least one feature (6) that is extracted from the acquired image (1) compared to the pattern which matches this at least one feature (6).

8. Method according to any one of the preceding claims, **characterized in that** for the same trailer (2) the at least one feature is stored several times for different bending angles (α).

9. Device for recognizing a trailer (2) which is attached to a vehicle (10), wherein the device (20) comprises a camera (12), a memory (15) and control means (14),
wherein the camera (12) is designed to acquire an image (1) that includes at least a part of the trailer (2),
wherein the device (20) is designed to extract at least one feature (6) from the image (1) by means of the control means (14) and to determine the trailer (2) as a trailer known to the device (20), when the at least one feature (6) matches a pattern of the known trailer stored in the memory (15),
**characterized in that**
- the at least one feature and each pattern comprises at least one profile feature (6), which has an intensity profile (7) along a trajectory (4) in the image (1), and
- the trajectory (4) corresponds to a circular arc about a pivot point (17) on the vehicle (10) about which a drawbar (3) of the trailer (2) pivots when the trailer (2) is attached to the vehicle (10) by means of the drawbar (3).

10. Device according to claim 9, **characterized in that** the device (20) for is designed to implement the method according to any one of claims 1-8.

## Revendications

1. Procédé de reconnaissance d'une remorque (2) qui est attelée à un véhicule (10),
le procédé comprenant les étapes suivantes :
acquisition d'une image (1) qui contient au moins une partie de la remorque (2),
extraction d'au moins une caractéristique (6) de la remorque (2) à partir de l'image (1), et
identification de la remorque (2) en tant que remorque connue si la au moins une caractéristique (6) coïncide avec un modèle mémorisé de la remorque connue, **caractérisé en ce que**
la au moins une caractéristique et chaque modèle comprennent au moins une caractéristique de courbe (6) qui présente une courbe d'intensité (7) le long d'une trajectoire (4) dans l'image (1), et
**en ce que** la trajectoire (4) correspond à un arc de cercle autour d'un pivot (17) sur le véhicule (10) autour duquel pivote une barre d'attelage (3) de la remorque (2) quand la remorque (2) est attelée au véhicule (10) au moyen de la barre d'attelage (3).

2. Procédé selon la revendication 1,
**caractérisé en ce que,**
quand la remorque (2) est identifiée en tant que remorque déjà connue, au moins une information mémorisée au préalable dans le véhicule (10) et affectée à la remorque (2) est employée pour la conduite du véhicule (10) avec la remorque (2) attelée.

3. Procédé selon la revendication 1 ou 2,
**caractérisé en ce que**
plusieurs images (1) qui contiennent au moins une partie de la remorque (2) sont acquises,
**en ce que** la moins une caractéristique (6) de la remorque (2) est extraite de chaque image (1) acquise,
**en ce que** la au moins une caractéristique (6) est mémorisée en tant que modèle pour la remorque (2) quand une variation de la au moins une caractéristique (6) extraite respective est inférieure à une valeur de seuil de variation prescrite, et
**en ce que**, conjointement avec l'au moins une caractéristique (6), au moins une information affectée à la remorque (2) est mémorisée pour la remorque (2).

4. Procédé selon la revendication 2 ou 3,
**caractérisé en ce que**
l'information comprend une longueur de barre d'attelage et/ou une position d'un milieu de barre d'attelage par rapport à la au moins une caractéristique (6) et/ou une longueur de la remorque (2) et/ou une distance entre roues de la remorque (2) et/ou une hauteur de la remorque (2).

5. Procédé selon l'une des revendications précédentes,
**caractérisé en ce que**
la au moins une caractéristique de courbe comprend plusieurs points (6) de la courbe d'intensité (7), et
**en ce que** chacun de ces points (6) correspond à un point de la courbe d'intensité (7) pour lequel la valeur d'une pente croissante (8) de la courbe d'intensité (7) est supérieure à une valeur de seuil de pente croissante prescrite.

6. Procédé selon l'une des revendications précédentes,
**caractérisé en ce que,**
dans l'image (1) acquise, il est défini un extrait (5) dans lequel se situe une barre d'attelage (3) de la remorque (2), et
**en ce que** chaque caractéristique de courbe (6) n'appartient qu'à un extrait de la trajectoire (4) qui est situé dans l'extrait (5) défini.

7. Procédé selon l'une des revendications précédentes,
**caractérisé en ce que,**
quand la remorque (2) est identifiée en tant que remorque déjà connue, en fonction d'un déplacement de la au moins une caractéristique (6) qui est extraite de l'image (1) acquise, un angle de coude (α) que forment le véhicule (10) et la remorque (2) attelée est défini par rapport au modèle avec lequel cette au moins une caractéristique (6) coïncide.

8. Procédé selon l'une des revendications précédentes,
**caractérisé en ce que,**
pour la même remorque (2), la au moins une caractéristique est mémorisée plusieurs fois pour différents angle de coude (α).

9. Dispositif de reconnaissance d'une remorque (2) qui est attelée à un véhicule (10),
le dispositif (20) comprenant une caméra (12), une mémoire (15) et des moyens de commande (14),
la caméra (12) étant constituée pour acquérir une image (1) qui contient au moins une partie de la remorque (2),
le dispositif (20) étant constitué pour, au moyen des moyens de commande (14), extraire au moins une caractéristique (6) à partir de l'image (1) et pour identifier la remorque (2) en tant que l'une des remorques connues par le dispositif (20) quand la au moins une caractéristique (6) coïncide avec un modèle de la remorque connue mémorisée dans la mémoire (15),
**caractérisé en ce que**
la au moins une caractéristique et chaque modèle comprennent au moins une caractéristique de courbe (6) qui présente une courbe d'intensité (7) le long d'une trajectoire (4) dans l'image (1), et
**en ce que** la trajectoire (4) correspond à un arc de cercle autour d'un pivot (17) sur le véhicule (10) autour duquel pivote une barre d'attelage (3) de la remorque (2) quand la remorque (2) est attelée au véhicule (10) au moyen de la barre d'attelage (3).

10. Dispositif selon la revendication 9, **caractérisé en ce que** le dispositif (20) est constitué pour la réalisation du procédé selon l'une des revendications 1-8.
